# EUROPÄISCHE PATENTANMELDUNG

(11) **EP 4 424 173 A1**
(43) Veröffentlichungstag der Anmeldung: **04.09.2024**
(21) Anmeldenummer: 23158940.9
(22) Anmeldetag: 28.02.2023
(51) Int. Cl.: A23L 3/40, F26B 21/02

(54) **GERÄT ZUM DÖRREN VON LEBENSMITTELN**

(71) Anmelder: A. & J. Stöckli AG, 8754 Netstal (CH)
(72) Erfinder: Baltensperger, Fritz, 8953 Dietikon (CH); Stöckli, Fritz, 8753 Mollis (CH)
(74) Vertreter: E. Blum & Co. AG

(57) **Zusammenfassung**

Die Erfindung betrifft ein Dörrgerät zur Trocknung von Lebensmitteln. Es umfasst einen Lüfter (7) zur Förderung von Luft und eine Heizvorrichtung (8) zur Erwärmung der Luft. Mehrere Ablageböden (11) zur Anordnung der Lebensmittel sind übereinander geschichtet. Zudem umfasst das Dörrgerät einen Zuluftkanal (9) zur Zuführung der Luft von der Heizvorrichtung (8) zu den Ablageböden (11) und einen Abluftkanal (12) zur zumindest teilweisen Rückführung der Luft von den Ablageböden (11) zum Lüfter (7). Die Luft strömt horizontal zwischen zwei direkt übereinander geschichteten Ablageböden (11), sodass eine gleichmässige Trocknung der Lebensmittel erfolgt, unabhängig davon, auf welcher Etage (2) die Lebensmittel jeweils angeordnet sind.

## Beschreibung

### Gebiet der Erfindung

Die Erfindung betrifft ein Dörrgerät zur Trocknung von Lebensmitteln. Es umfasst einen Lüfter zur Förderung von Luft und eine Heizvorrichtung zur Erwärmung der Luft. Mehrere Ablageböden zur Anordnung der Lebensmittel auf den Ablageböden sind übereinander geschichtet. Ein Zuluftkanal führt Luft von der Heizvorrichtung zu den Ablageböden und ein Abluftkanal führt zumindest teilweise Luft von den Ablageböden zurück zum Lüfter.

### Hintergrund

Dörren ist ein Konservieren von Lebensmitteln durch Lufttrocknung. Ziel ist die Dehydratation, also den Lebensmitteln so viel Wasser wie möglich zu entziehen. Damit wird den Mikroorganismen, die den Verderb bewirken, die Lebensgrundlage entzogen und die Haltbarkeit der Lebensmittel verlängert.

Beim Dörren erfolgt der Wasserentzug dadurch, dass trockene, warme Luft auf den Lebensmitteln vorbeiströmt. Darin verdunstet die Feuchtigkeitsschicht an der Oberfläche der Lebensmittel. Aus dem Inneren der Lebensmittel fliesst Wasser nach, welches an der Oberfläche erneut verdunstet, bis der Wassergehalt des Lebensmittels für ein weiteres Nachfliessen zu gering ist.

Dörren kann grundsätzlich mittels Umgebungsluft durchgeführt werden. Dies ist jedoch umständlich, weil es lange dauert und das Dörrgut deshalb regelmässig gewendet und auf Schimmelbildung kontrolliert werden muss. Ein schnelleres Dörren ist mittels der Erzeugung eines warmen Luftstromes möglich. Lebensmittel können beispielsweise auch in einem normalen Backofen gedörrt werden. Dabei empfiehlt sich, die Backofentür einen Spalt geöffnet zu halten, damit die Feuchtigkeit aus dem Garraum entweichen kann.

Alternativ sind spezielle Dörrgeräte bekannt, welche insbesondere von Vorteil sind, wenn grössere Mengen von Lebensmitteln, insbesondere Früchte, Gemüse oder Pilze getrocknet werden sollen. Solche Dörrgeräte umfassen eine Heizvorrichtung und ein Gebläse, das die erwärmte Luft nach oben durch übereinandergestapelte, mit Dörrgut belegte Trockensiebe bläst.

### Darstellung der Erfindung

Es stellt sich die Aufgabe, ein Dörrgerät bereitzustellen, mittels welchem Lebensmittel gleichmässig gedörrt werden können.

Diese Aufgabe wird vom Dörrgerät gemäss dem unabhängigen Anspruch gelöst. Demgemäss umfasst das Dörrgerät zur Trocknung von Lebensmitteln einen Lüfter zur Förderung von Luft und eine Heizvorrichtung zur Erwärmung der Luft. Mehrere Ablageböden sind übereinander geschichtet. Auf diesen Ablageböden können Lebensmittel zum Dörren, also das Dörrgut, angeordnet werden. Zudem umfasst das Dörrgerät einen Zuluftkanal zur Zuführung der Luft von der Heizvorrichtung zu den Ablageböden und einen Abluftkanal zur zumindest teilweisen Rückführung der Luft von den Ablageböden zum Lüfter.

Der Zuluftkanal, der Abluftkanal und die Ablageböden sind derart angeordnet und ausgestaltet, dass die Luft zwischen zwei direkt übereinander geschichteten Ablageböden horizontal strömt. Dies bedeutet, dass die Luft primär horizontal strömt und nicht in vertikaler Richtung durch perforierte oder gitterförmige Ablageböden hindurchströmt. Die Luft strömt somit vom Lüfter und der Heizvorrichtung durch den Zuluftkanal, horizontal über die Ablageböden, durch den Abluftkanal und zumindest teilweise wieder zurück zum Lüfter und zur Heizvorrichtung.

Eine zumindest teilweise Rückführung der Luft zum Lüfter bedeutet, dass die Luft zumindest teilweise als Umluft strömt, d.h. dieselbe Luft mehr als einmal in mehreren Umläufen über die Ablageböden strömt. Wird nur ein Teil der Luft zurückgeführt, bedeutet dies, dass der Rest bzw. der andere Teil der Luft nach Überströmung der Ablageböden das Dörrgerät in die Umgebung verlässt. Eine teilweise Abluft in die Umgebung ist dann sinnvoll, wenn Feuchtigkeit aus dem Dörrgerät in die Umgebung abtransportiert werden soll. Das Dörrgerät wird beispielsweise dann ohne Abluft, d.h. mit vollständiger Umluft betrieben, wenn die Lebensmittel fermentiert werden sollen.

Eine horizontale Überströmung der Lebensmittel führt zu einer gleichmässigeren Trocknung der im Dörrgerät verteilt angeordneten Lebensmitteln. Würde die Luft nicht horizontal, sondern vertikal von unten durch das Dörrgerät strömen, so würden die Lebensmittel weiter unten schneller getrocknet, als die weiter oben angeordneten Lebensmittel.

Bei in Scheiben oder Schnitze geschnittenen Früchten, Gemüsen und Pilzen sind je nach Fruchtart Temperaturen zwischen 30 und 70 °C geeignet, um nach einer Dörrzeit von 2 bis 30 Stunden einen Dörrgrad von 10 bis 30 Prozent zu erreichen. Körner (Mais, Getreide, Samen, Kerne, Nüsse) können nach vier bis sechs Stunden Trocknung einen Dörrgrad von 10 bis 20 Prozent erreichen.

Mit Vorteil strömt die Luft pro Umlauf nur über genau einen Ablageboden. Mit "pro Umlauf" ist der Weg ausgehend vom Lüfter bis wieder zurück zum Lüfter gemeint, d.h. ein einziger Umlauf der Umluft im Dörrgerät. Mit "genau einem Ablageboden" ist gemeint, dass die Luft nicht auf unterschiedliche hoch, bzw. unterschiedliche, übereinander, direkt oder indirekt übereinander, angeordneten Ablageböden strömt, sondern nur über einen Ablageboden auf einer einzigen horizontalen Etage.

Wird pro Umlauf lediglich ein einziger Ablageboden überströmt, hat dies zur Folge, dass die Trocknung auf jedem der übereinander geschichteten Ablageböden identisch ist. Das Dörrergebnis ist somit stets gleich gut, unabhängig davon, wie viele Ablageböden übereinander geschichtet werden. Würde die Luft vertikal durch die Ablageböden von unten nach oben strömen, so würden die weiter oben angeordneten Lebensmittel umso schlechter gedörrt werden, je mehr Ablageböden übereinander geschichtet sind.

Mit Vorteil verläuft der Zuluftkanal vertikal und ausserhalb der Ablageböden. D.h. die Luft wird vom Lüfter und der Heizvorrichtung in den Zuluftkanal eingeführt und in diesem vertikal nach oben befördert bis zum jeweils zu überströmenden Ablageboden. Es erfolgt eine gleichmässige Zuführung von Luft in die jeweiligen Ablageböden und die Überströmung jedes Ablagebodens beginnt mit Luft aus dem Zuluftkanal und nicht mit Luft, welche bereits Ablageböden unterer Etagen überströmt hat.

Insbesondere verläuft auch der Abluftkanal vertikal und ausserhalb der Ablageböden. Sämtliche Luft, welche einen Ablageboden überströmt hat, wird in den Abluftkanal befördert und verlässt anschliessend das Dörrgerät in die Umgebung oder wird zum Lüfter zurückgeführt.

Mit Vorteil sind der Zuluftkanal und der Abluftkanal an gegenüberliegenden Seiten, insbesondere ausserhalb der Ablageböden, angeordnet.

Vorteilhaft beginnt die Luft an einem ersten äusseren Ende der Ablageböden mit der Überströmung der Ablageböden und beendet an einem zweiten äusseren Ende der Ablageböden die Überströmung der Ablageböden. D.h. die Luft wird nicht mittig auf die Ablageböden geströmt, sondern tritt auf der einen Seite auf den jeweiligen Ablageboden, überströmt diesen vollständig, und verlässt den jeweiligen Ablageboden an einem anderen äusseren Ende. Dies hat eine gleichmässige Überströmung des jeweils gesamten Ablagebodens zur Folge. Eine gleichmässige Trocknung der Lebensmittel wird ermöglicht.

Insbesondere weisen die Ablageböden in der Horizontalen eine rechteckige Form auf. Mit "rechteckig" ist "im Wesentlichen rechteckig" gemeint. Beispielsweise Rundungen an den jeweiligen Ecken ändern nichts daran, dass es immer noch eine Rechteckform ist. Die Rechteckform eignet sich deshalb sehr gut, da die Luft von der einen Seite des Rechtecks zur anderen Seite des Rechtecks strömen kann.

Vorteilhaft strömt die Luft im Umluftkreislauf vom Lüfter bis zurück zum Lüfter stets die gleiche Streckenlänge, unabhängig davon, über welchen Ablageboden der mehreren übereinander schichtbaren Ablageböden die Luft strömt. Dadurch wird gewährleistet, dass die Lebensmittel möglichst gleichmässig getrocknet werden. Müsste der Luftstrom für die Überströmung einzelner Ablageböden unterschiedliche Streckenlängen zurücklegen, so hätte dies eine unterschiedliche Trocknungsintensität auf den einzelnen Ablageböden zur Folge. Denn eine grössere Streckenlänge bedeutet einen grösseren Strömungswiderstand, d.h. über diejenigen Ablageböden, für welche die Luft eine grössere Streckenlänge zurücklegen müsste, würde ein kleineres Luftvolumen strömen und die Trocknungsintensität wäre geringer. Bei denjenigen Ablageböden mit geringerer Streckenlänge wäre die Trocknungsintensität höher.

Insbesondere umfasst das Trocknungsgerät einen Lufteinlass zur Zuführung von Aussenluft in das Dörrgerät. Insbesondere ist der Lufteinlass an der Unterseite des Dörrgeräts angeordnet. Zudem umfasst das Trocknungsgerät einen Luftauslass zur Abführung von Luft aus dem Dörrgerät nach aussen. Insbesondere ist der Luftauslass an der Oberseite des Dörrgeräts angeordnet. Das Dörrgerät kann somit nicht nur mit reiner Umluft betrieben werden, sondern auch mit teilweiser oder vollständiger Abluft. Abluft ist diejenige Luft, welche das Dörrgerät durch den Luftauslass verlässt. Umluft ist diejenige Luft, welche zum Lüfter zurückkehrt und erneut die Ablageböden überströmt. Insbesondere ergänzen sich die Abluft und die Umluft zu 100% der gesamten Luft, welche über die Ablageböden strömt.

Insbesondere beträgt Abluft mindestens 10% und maximal 50%, oder mindestens 20% und maximal 50% oder mindestens 20% und maximal 40%.

Vorteilhaft sind der Lufteinlass und/oder der Luftauslass verschliessbar. Ist der Lufteinlass und/oder der Luftauslass vollständig verschlossen, wird das Dörrgerät vollständig mit Umluft betrieben. Dies ist insbesondere beim Fermentieren von Lebensmitteln erwünscht. Der Lufteinlass und/oder der Luftauslass können auch nur teilweise oder überhaupt nicht verschlossen werden. In diesem Fall wird das Dörrgerät zumindest teilweise mit Abluft betrieben. Mittels der Abluft wird Feuchtigkeit aus dem Dörrgerät transportiert. Zudem kann auch der Abluftkanal verschlossen werden, sodass das Dörrgerät vollständig mit Abluft betrieben wird.

Insbesondere kann zum Verschliessen des Lufteinlasses und/oder des Luftauslasses ein stufenweiser öffenbarer Verschluss vorgesehen sein. Der Verschluss ist insbesondere ein stufenweise bewegbarer Schieber oder eine stufenweise bewegbare Klappe.

Mit Vorteil sind die Ablageböden jeweils Bestandteil stapelbarer Etagen. Eine Etage umfasst jeweils einen stapelbaren Rahmen und einen vom Rahmen getragenen Ablageboden. Insbesondere ist der Ablageboden ein Gitter, insbesondere ein Wabengitter, welches vom Rahmen getragen ist. Ein Wabengitter hat eine besonders gute Trocknung der Lebensmittel zur Folge. Alternativ kann das Gitter aus Kunststoff oder aus Metall ausgestaltet sein.

Vorteilhaft ist der Ablageboden vom Rahmen entfernbar. Bei entferntem Ablageboden besteht zwischen zwei übereinander geschichteten Ablageböden ein vertikaler Abstand von mindestens zwei Rahmenhöhen, insbesondere von mindestens drei Rahmenhöhen. Ist der Ablageboden in einer Etage entfernt, so dient der Rahmen nur noch als vertikaler Distanzhalter. D.h. die darunter gestapelte Etage erhält eine grössere Etagenhöhe und grössere bzw. höhere Lebensmittel können platziert werden.

Insbesondere umfasst das Dörrgerät mindestens drei, insbesondere mindestens fünf, insbesondere mindestens acht, übereinander stapelbare Etagen. Die Etagen sind modular stapelbar, sodass mit dem gleichen Dörrgerät mit einer unterschiedlichen Anzahl gestapelter Etagen gearbeitet werden kann.

Insbesondere umfasst das Dörrgerät eine Eingabevorrichtung, ausgestaltet, dass ein Benutzer dem Dörrgerät die Anzahl geschichteter Etagen mitteilen kann. Dies hat den Vorteil, dass die Steuerung des Dörrgeräts die Leistung des Lüfters und/oder die Leistung der Heizvorrichtung abhängig von der Anzahl Etagen einstellen kann. Je mehr Etagen gestapelt sind, umso höher muss die Trocknungsleistung sein, d.h. mit umso höherer Leistung müssen Lüfter und/oder Heizvorrichtung betrieben werden.

Das Dörrgerät bzw. die Gesamtfläche der Ablageböden kann somit modular der Menge der zu trocknenden Lebensmittel angepasst werden. Je mehr Lebensmittel gleichzeitig getrocknet werden sollen, je mehr Etagen sollen gestapelt werden.

Vorteilhaft umfasst der Rahmen jeweils einen Teilabschnitt des Abluftkanals. Dies ermöglicht einerseits eine kompakte Ausgestaltung des Abluftkanals. Andererseits können die Längen des Abluftkanals ebenfalls modular an die Anzahl gestapelter Etagen angepasst werden.

Insbesondere sind die Etagen derart ausgestaltet, dass diese nur derart stapelbar sind, dass die Teilabschnitte des Zuluftkanals und die Teilabschnitte des Abluftkanals übereinander liegen und das Dörrgerät nur derart funktionstüchtig ist.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 ein Dörrgerät in 3D-Ansicht mit vier gestapelten Etagen;
Fig. 2 das Dörrgerät von einer ersten Seite;
Fig. 3 das Dörrgerät von einer zweiten Seite;
Fig. 4 einen Schnitt durch das Dörrgerät;
Fig. 5 den Sockel des Dörrgeräts in 3D-Ansicht;
Fig. 6 einen Schnitt des Sockels mit Sicht von oben;
Fig. 7 eine Seitenansicht des Sockels;
Fig. 8 den Deckel des Dörrgeräts;
Fig. 9 das Dörrgerät mit insgesamt zehn gestapelten Etagen;
Fig. 10 das Dörrgerät mit einer einzigen Etage;
Fig. 11 eine Etage mit einem Rahmen und einem entfernten Ablageboden; und
Fig. 12 eine Etage mit einem Rahmen und einem alternativen Ablageboden mit Sicht von oben.

### Weg zur Ausführung der Erfindung

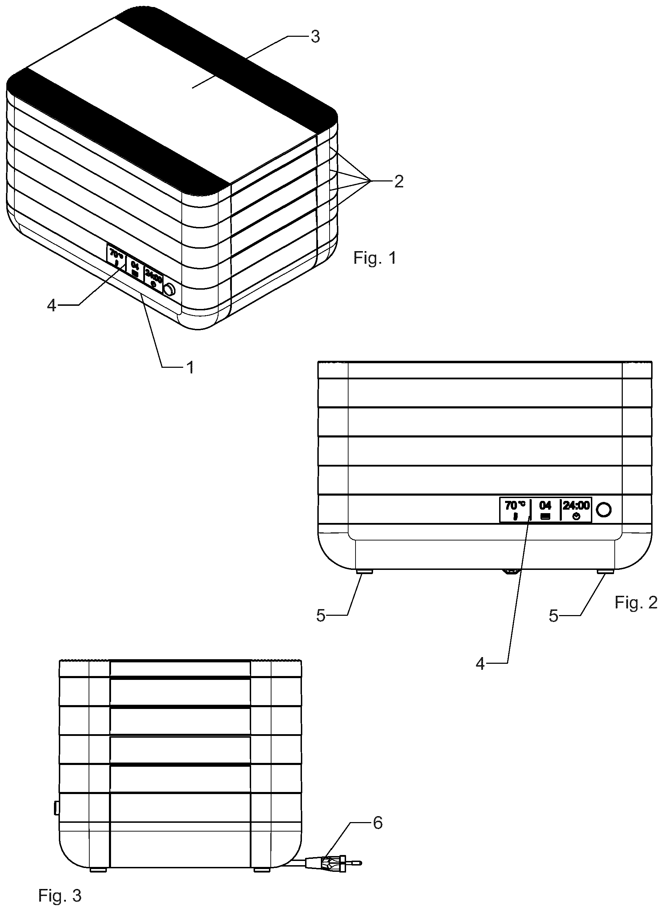

Die Fig. 1, 2 und 3 zeigen ein beispielhaftes, erfindungsgemässes Dörrgerät. Es umfasst einen Sockel 1, vier Etagen 2 und einen Deckel 3. Das Dörrgerät hat die Form eines Quaders, d.h. einen rechteckigen, horizontalen Querschnitt. Auf der einen Seite des Dörrgeräts sind Ein- und Ausgabeelemente 4 angeordnet. Über die Eingabeelemente kann der Benutzer das Dörrgerät steuern, insbesondere den Betrieb des Dörrgeräts starten, die Dauer des Dörrverfahrens einstellen oder dem Dörrgerät mitteilen, wie viele Etagen auf dem Sockel 1 angeordnet sind. Über die Ausgabeelemente kann das Dörrgerät dem Benutzer beispielsweise die Restlaufzeit des Dörrverfahrens, die Temperatur im Dörrgerät oder die Anzahl eingestellter Etagen anzeigen.

Zur Vermeidung einer Überhitzung im Sockel 1, sind an der Unterseite des Dörrgeräts Standfüsse 5 angeordnet. Ein Stromkabel 6 zur Zuführung elektrischer Energie ist ebenfalls am Sockel 1 angeordnet.

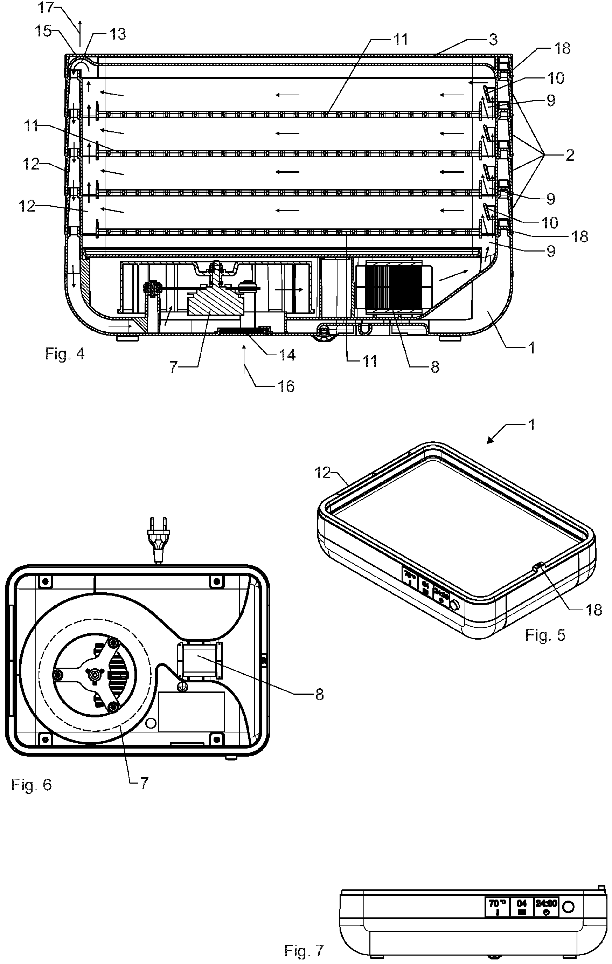

Die Fig. 4 zeigt einen Schnitt des Dörrgeräts in Seitenansicht. Die im Dörrgerät herrschende Strömungsrichtung der Luft ist mit Pfeilen gekennzeichnet. Im Sockel 1 sind ein Radiallüfter 7 und eine Heizvorrichtung 8 angeordnet. Die Luft strömt vom Radiallüfter 7 zur Heizvorrichtung 8. Dort wird die Luft erwärmt und strömt vertikal nach oben durch den seitlich angeordneten, mehrheitlich vertikal verlaufenden Zuluftkanal 9. Der Zuluftkanal 9 ist im untersten Abschnitt Bestandteil des Sockels 1. Weiter nach oben wird der Zuluftkanal 9 durch Öffnungen in den Etagen 2 gebildet. Auf jeder Etage 2 ist zudem eine Ablenkfläche 10 vorhanden, welche die Luft aus dem Zufuhrkanal 9 aus der Vertikalen auf die Horizontale ablenkt. Die Luft strömt anschliessend horizontal über rechteckig geformte Ablageböden 11, welche Bestandteil der Etagen 2 sind. Jede Etage 2 umfasst genau einen Ablageboden 11. Auf den Ablageböden 11 können die zu dörrenden Lebensmittel angeordnet werden. In diesem Bereich, in welchem die Lebensmittel angeordnet sind, strömt die Luft entlang der Horizontalen zwischen zwei übereinander angeordneten Ablageböden 11.

Am Ende der Überströmung der Ablageböden 11 wird die Luft vertikal nach oben in den Abluftkanal 12 gelenkt. Ganz oben im Dörrgerät erfolgt eine Umlenkung 13 um 180° und die Luft strömt im Abluftkanal 12 wieder nach unten zurück zum Lüfter 7. D.h. der Abluftkanal 12 verläuft mehrheitlich vertikal und ist im Dörrgerät auf einer dem Zuluftkanal 9 gegenüberliegenden Seite angeordnet. Zuluftkanal 9 und Abluftkanal 12 sind zudem ausserhalb der Ablageböden 11 angeordnet.

Nach Durchströmung des Abluftkanals 12 wiederholt sich der Strömungskreislauf. Die hier beschriebene Strömung entspricht einer sogenannten Umluftzirkulation. D.h. die Luft zirkuliert innerhalb des Dörrgerätes, verlässt das Dörrgerät nicht und es kommt keine frische Luft zum Strömungskreislauf hinzu.

Das Dörrgerät ist derart ausgestaltet, dass die Luft pro Umlauf nur über genau einen einzigen Ablageboden 11 strömt. Denn nach Überströmung eines einzelnen Ablagebodens 11 wird die Luft durch den Abluftkanal 12 zurück zum Lüfter 7 befördert und es beginnt ein neuer Umlauf. Dies hat zur Folge, dass die Luft im Umluftkreislauf vom Lüfter 7 bis zurück zum Lüfter 7 stets die gleiche Streckenlänge zurücklegt, unabhängig davon, über welchen Ablageboden 11 der jeweilige Luftanteil strömt.

Das Dörrgerät kann nicht nur im Umluftbetrieb, sondern auch in einem reinen Abluftbetrieb oder mit einer Mischung zwischen Umluft und Abluft betrieben werden. Beispielsweise kann das Dörrgerät derart betrieben werden, dass pro Umlauf 1/3 der Luft als Abluft das Dörrgerät verlässt und die übrigen 2/3 der Luft in einen weiteren Umlauf eintreten.

Für den Abluftbetrieb ist an der Unterseite des Dörrgeräts ein Lufteinlass 14 angeordnet und an der Oberseite des Dörrgeräts ist ein Luftauslass 15 angeordnet. Wird das Dörrgerät mit reiner Umluft betrieben, so sind der Lufteinlass 14 und der Luftauslass 15 geschlossen. Grundsätzlich würde es auch genügen, wenn nur entweder der Lufteinlass 14 oder der Luftauslass 15 geschlossen wäre. Soll nach Überströmung der Ablageböden 11 die Luft zumindest teilweise das Dörrgerät als Abluft verlassen, so sind der Lufteinlass 14 und der Luftauslass 15 zumindest teilweise geöffnet. Der Luftauslass 14 und der Luftauslass 15 können beispielsweise mittels eines Schiebers oder mit einer Klappe geöffnet und geschlossen werden. Die in das Dörrgerät eintretende Luft ist mit dem Pfeil 16 und die das Dörrgerät verlassende Luft ist mit dem Pfeil 17 markiert.

Fig. 5 zeigt eine 3D-Ansicht des Sockels 1. Derjenige Abschnitt des Abluftkanals 12, welcher die Luft nach unten führt, ist gut sichtbar. Nahe zum Zuluftkanal 9 ist zudem eine Erhebung 18 angeordnet, welche die aufeinandergestapelten Etagen 2 zueinander positioniert.

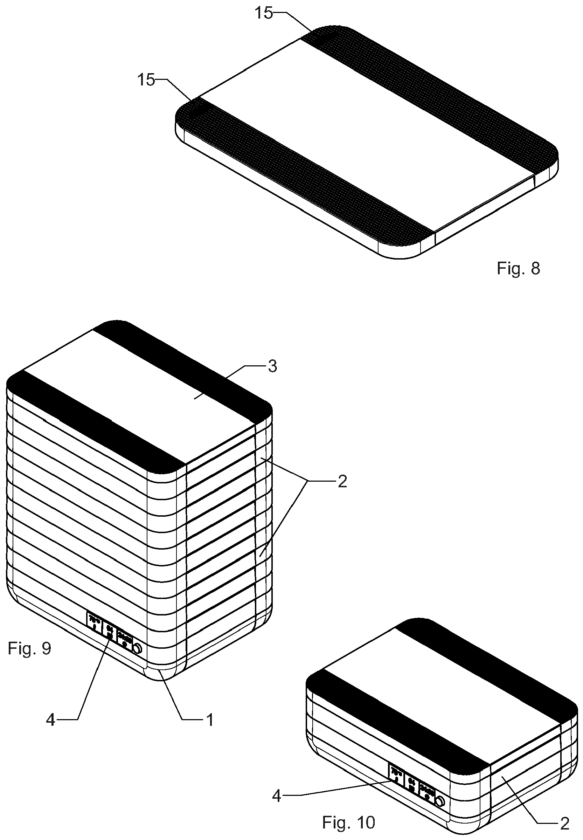

Die Fig. 6 zeigt einen Schnitt durch den Sockel 1 mit Sicht von oben. Der Lüfter 7 und die Heizvorrichtung 8 sind gut sichtbar. Die Fig. 7 zeigt den Sockel in Seitenansicht und die Fig. 8 zeigt den Deckel 3, welcher oberhalb der obersten Etage angeordnet ist, um das Dörrgerät gegen oben abzuschliessen. Die Luft, welche den Ablageboden 11 der obersten Etage 2 überströmt, strömt zwischen dem Ablageboden 11 und dem Deckel 3. Der Luftauslass 15 ist Bestandteil des Deckels 3.

Die Fig. 9 und 10 zeigen das Dörrgerät, wie es bereits in den Fig. 1 bis 8 gezeigt wurde, jedoch mit jeweils einer anderen Anzahl an gestapelten Etagen 2. Die Fig. 9 zeigt das Dörrgerät mit zehn gestapelten Etagen 2 und die Fig. 10 zeigt das Dörrgerät mit einer einzigen Etage 2. Der Benutzer kann über die Eingabeelemente 4 jeweils mitteilen, wie viele Etagen 2 gestapelt sind. Bei der Konfiguration gemäss der Fig. 9 mit insgesamt zehn Etagen werden der Lüfter 7 und die Heizvorrichtung 8 mit deutlich mehr Leistung betrieben, wie in der Konfiguration mit vier Etagen 2 gemäss den Fig. 1 bis 8 und wie in der Konfiguration mit einer einzigen Etage 2 gemäss der Fig. 10.

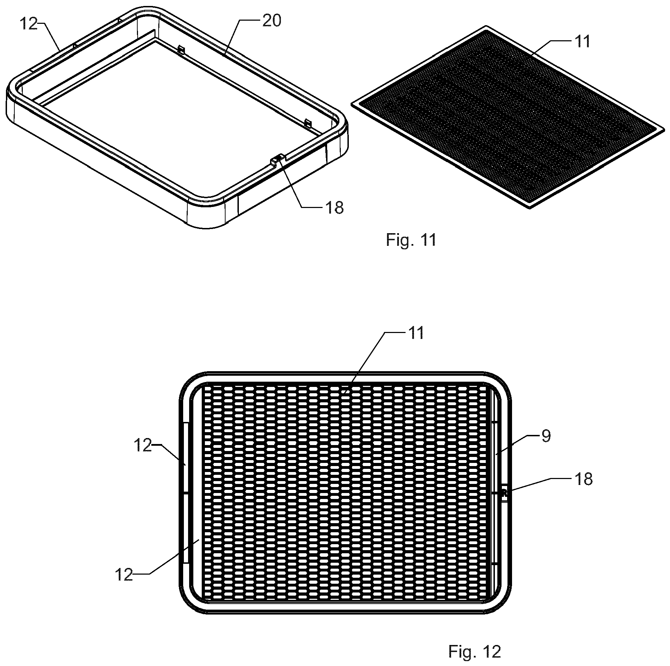

Die Fig. 11 zeigt eine einzige stapelbare Etage 2. Diese umfasst einen stapelbaren Rahmen 20 und einen Ablageboden 11. Der Ablageboden 11 wird vom Rahmen 20 getragen und ist in der Ausführung der Fig. 11 ein Metallgitter. Der Ablageboden 11 kann alternativ auch als Kunststoffgitter ausgestaltet sein. Beim Rahmen 20 ist zudem ein Abschnitt des Abluftkanals 12 sichtbar, durch welchen die Luft nach unten zum Lüfter 7 strömt. Der Ablageboden 11 kann vom Rahmen 20 entfernt werden.

Der Ablageboden 11 kann in Form eines wabenförmigen Gitters ausgestaltet sein. Die Wabenform ist in Fig. 12 dargestellt. Seitlich des Gitters sind in Fig. 12 zudem die Öffnungen des Zuluftkanals 9 und die Öffnungen des Abluftkanals 12 gezeigt, wobei durch beide Öffnungen die Luft jeweils vertikal strömt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Dörrgerät zur Trocknung von Lebensmitteln, aufweisend
- einen Lüfter (7) zur Förderung von Luft,
- eine Heizvorrichtung (8) zur Erwärmung der Luft,
- mehrere übereinander geschichtete Ablageböden (11) zur Anordnung der Lebensmittel auf den Ablageböden (11),
- einen Zuluftkanal (9) zur Zuführung der Luft von der Heizvorrichtung (8) zu den Ablageböden (11),
- einen Abluftkanal (12) zur zumindest teilweisen Rückführung der Luft von den Ablageböden (11) zum Lüfter (7),
**dadurch gekennzeichnet, dass** der Zuluftkanal (9), der Abluftkanal (12) und die Ablageböden (11) derart angeordnet und ausgestaltet sind, dass die Luft horizontal zwischen zwei direkt übereinander geschichteten Ablageböden (11) strömt.

2. Dörrgerät nach Anspruch 1, wobei der Zuluftkanal (9), der Abluftkanal (12) und die Ablageböden (11) derart angeordnet und ausgestaltet sind, dass die Luft pro Umlauf nur über genau einen Ablageboden (11) strömt.

3. Dörrgerät nach einem der vorangehenden Ansprüche, wobei der Zuluftkanal (9) zumindest teilweise, insbesondere mehrheitlich, vertikal verläuft und ausserhalb der Ablageböden (11) angeordnet ist.

4. Dörrgerät nach einem der vorangehenden Ansprüche, wobei der Abluftkanal (12) zumindest teilweise, insbesondere mehrheitlich, vertikal verläuft und ausserhalb der Ablageböden (11) angeordnet ist.

5. Dörrgerät nach einem der vorangehenden Ansprüche, wobei der Zuluftkanal (9) und der Abluftkanal (12) an gegenüberliegenden Seiten, insbesondere ausserhalb der Ablageböden (11), angeordnet sind.

6. Dörrgerät nach einem der vorangehenden Ansprüche, wobei der Zuluftkanal (9), der Abluftkanal (12) und die Ablageböden (11) derart angeordnet und ausgestaltet sind, dass die Luft an einem ersten äusseren Ende der Ablageböden (11) mit der Überströmung der Ablageböden (11) beginnt und an einem zweiten äusseren Ende der Ablageböden (11) die Überströmung der Ablageböden (11) endet.

7. Dörrgerät nach einem der vorangehenden Ansprüche, wobei die Ablageböden (11) in der Horizontalen eine rechteckige Form aufweisen.

8. Dörrgerät nach einem der vorangehenden Ansprüche, wobei der Zuluftkanal (9), der Abluftkanal (12) und die Ablageböden (11) derart angeordnet und ausgestaltet sind, dass die Luft im Umluftkreislauf vom Lüfter (7) bis zurück zum Lüfter (7) stets die gleiche Streckenlänge strömt, unabhängig davon, über welchen Ablageboden (11) der mehreren übereinander schichtbaren Ablageböden (11) die Luft strömt.

9. Dörrgerät nach einem der vorangehenden Ansprüche, aufweisend
- einen Lufteinlass (14), zur Zuführung von Aussenluft in das Dörrgerät, insbesondere wobei der Lufteinlass (14) an der Unterseite des Dörrgeräts angeordnet ist,
- einen Luftauslass (15), zur Abführung von Luft aus dem Dörrgerät nach aussen, insbesondere wobei der Luftauslass (15) an der Oberseite des Dörrgeräts angeordnet ist.

10. Dörrgerät nach Anspruch 9, derart ausgestaltet, dass die Luft in Form von Abluft nach Überströmung der Ablageböden (11) das Dörrgerät teilweise durch den Luftauslass (15) verlässt und teilweise in Form von Umluft zum Lüfter (7) zurückgeführt wird,
insbesondere wobei die Abluft und die Umluft sich zu 100% der Luft ergänzen, welche über die Ablageböden (11) strömt, und/oder
insbesondere wobei die Abluft
- mindestens 10% und maximal 50% beträgt,
- mindestens 20% und maximal 50% beträgt,
- mindestens 20% und maximal 40% beträgt.

11. Dörrgerät nach Anspruch 9 oder 10, wobei der Lufteinlass (14) und/oder der Luftauslass (15)
- verschliessbar sind, um das Dörrgerät rein mit Umluft zu betreiben,
- öffenbar sind, um das Dörrgerät mit zumindest teilweiser Abluft zu betreiben.

12. Dörrgerät nach einem der vorangehenden Ansprüche, wobei die Ablageböden (11) jeweils Bestandteil stapelbarer Etagen (2) sind, wobei die Etage (2) jeweils einen stapelbaren Rahmen (20) und einen des vom Rahmen (20) getragenen Ablagebodens (11) aufweist,
insbesondere wobei der Ablageboden (11) ein Gitter, insbesondere ein Wabengitter ist.

13. Dörrgerät nach Anspruch 12, wobei der Ablageboden (11) vom Rahmen (20) entfernbar ist, und bei entferntem Ablageboden (11) zwischen zwei übereinander geschichteten Ablageböden (11) mindestens zwei Rahmenhöhen, insbesondere mindestens drei Rahmenhöhen, vertikaler Abstand ist.

14. Dörrgerät nach Anspruch 12 oder 13, umfassend mindestens drei übereinander stapelbare Etagen (2), insbesondere mindestens fünf, insbesondere mindestens acht, übereinander stapelbare Etagen (2), wobei die Etagen (2) modular stapelbar sind, sodass mit dem gleichen Dörrgerät mit einer unterschiedlichen Anzahl gestapelter Etagen (2) gearbeitet werden kann.

15. Dörrgerät nach einem der Ansprüche 12 bis 14, wobei der Rahmen (20) jeweils einen Teilabschnitt des Abluftkanals (9) aufweist,
insbesondere wobei die Etagen (2) derart ausgestaltet sind, dass diese nur derart stapelbar sind, dass die Teilabschnitte des Zuluftkanals (9) und die Teilabschnitte des Abluftkanals (12) übereinander liegen und das Dörrgerät nur derart funktionstüchtig ist.
